# EUROPEAN PATENT APPLICATION

(11) **EP 3 790 184 A1**
(43) Date of publication of application: **10.03.2021**
(21) Application number: 20195229.8
(22) Date of filing: 09.09.2020
(51) Int. Cl.: H02P 6/28

(54) **ELECTRIC STAPLER**

(30) Priority: 09.09.2019 JP 2019163937
(71) Applicant: Max Co., Ltd., Tokyo 103-8502 (JP)
(72) Inventor: CHIGIRA, Yoshio, Tokyo, 103-8502 (JP); KISHI, Kazuhiko, Tokyo, 103-8502 (JP); KAMEDA, Futoshi, Tokyo, 103-8502 (JP)
(74) Representative: Samson & Partner Patentanwälte mbB

(57) **Abstract**

An electric stapler is configured to perform communication with a sheet processing apparatus. The electric stapler includes: a binding unit configured to execute binding processing for a sheet bundle; a motor configured to drive the binding unit; a control unit configured to control the motor; and a communication interface configured to perform communication with the sheet processing apparatus. The control unit controls the motor to execute the binding processing by the binding unit when a predetermined signal is received from the sheet processing apparatus via the communication interface.

## Description

### TECHNICAL FIELD

The present disclosure relates to an electric stapler.

### BACKGROUND

In the related art, a post-processing apparatus in which an electric stapler is embedded is widely used (for example, Patent Literature 1). The post-processing apparatus includes a control unit for controlling the electric stapler. The control unit is configured to transmit an operation start command, an operation stop command and the like to the electric stapler, based on a state of a sheet bundle, a state of staples in a staple accommodation unit and the like transmitted from the electric stapler. The electric stapler can execute binding processing, based on the commands transmitted from the control unit.

Patent Literature 1: JP-A-2004-002021

The control unit is disposed outside the electric stapler, and is connected to the electric stapler by a plurality of wires. When executing the binding processing in the electric stapler, it is necessary for the electric stapler to transmit, to the control unit, signals indicative of various states of the electric stapler-side. For this reason, many wires are required so as to interconnect the control unit and the electric stapler. Also, in recent years, the electric stapler is highly functionalized. However, when the electric stapler is highly functionalized, the number of drive sources such as a motor, a variety of sensors and the like also increases. Therefore, the number of signals from the electric stapler to the control unit further increases, and the wires interconnecting the electric stapler and the post-processing apparatus become larger. As a result, problems such as an increase in cost due to the increase in the number of wires, arrangement of wires, noise and the like become more prominent.

It is therefore an object of the present disclosure to provide an electric stapler capable of reducing the number of wires extending outward from an electric stapler as small as possible.

### SUMMARY OF DISCLOSURE

According to the disclosure, there is provided an electric stapler configured to perform communication with a sheet processing apparatus, the electric stapler comprising: a binding unit configured to execute binding processing for a sheet bundle; a motor configured to drive the binding unit; a control unit configured to control the motor; and a communication interface configured to perform communication with the sheet processing apparatus, wherein the control unit controls the motor to execute the binding processing by the binding unit when a predetermined signal is received from the sheet processing apparatus via the communication interface.

In the meantime, the electric stapler may be embedded in an image forming apparatus (a complex machine, a copier and the like), in addition to the post-processing apparatus, in some cases. As used herein, the "sheet processing apparatus" has a meaning including both the post-processing apparatus and the image forming apparatus.

According to an aspect of the present disclosure, the electric stapler, the control unit that is conventionally provided in the post-processing apparatus (sheet processing apparatus) is provided in the electric stapler. Therefore, only the communication line for transmitting and receiving the operation start command, the operation stop command and the like between the electric stapler and the post-processing apparatus is required, so that it is possible to reduce the number of wires for interconnecting the electric stapler and the sheet processing apparatus.

### BRIEF DESCRIPTION OF DRAWINGS

FIG. 1 is a block diagram of a post-processing apparatus including an electric stapler in accordance with an embodiment.
FIG. 2 is a perspective view of the electric stapler in accordance with the embodiment, as seen from the front.
FIG. 3 is a perspective view of an inside of the electric stapler in accordance with the embodiment, as seen from the rear.
FIG. 4A is a perspective view of the electric stapler in accordance with the embodiment, as seen from the rear.
FIG. 4B is a perspective view depicting a state where a bottom wall of the electric stapler shown in FIG. 4A is detached.
FIG. 5 is a perspective view of a substrate that is mounted on the electric stapler in accordance with the embodiment.
FIG. 6 is a perspective view of an electric stapler in accordance with a first modified embodiment, as seen from the front.

### DESCRIPTION OF EMBODIMENTS

### <Embodiment>

### (Example of Block Configuration of Post-Processing Device 10)

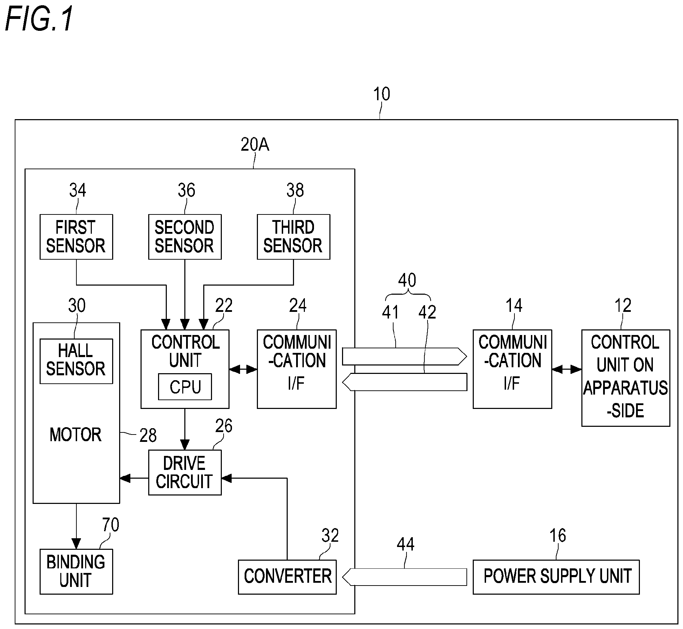

FIG. 1 is a block diagram of a post-processing apparatus 10 including an electric stapler 20A in accordance with the present embodiment.

The post-processing apparatus 10 is an example of the sheet processing apparatus, and is disposed on a downstream side of an image forming apparatus (not shown) configured to form an image on a sheet with respect to a sheet conveying direction, for example. The post-processing apparatus 10 includes a control unit 12 on the apparatus-side configured to control the apparatus as a whole, a communication interface 14 configured to perform communication with an electric stapler 20A that is another device, a power supply unit 16 configured to feed power to the electric stapler 20A and the like, and the electric stapler 20A configured to execute binding processing for a sheet bundle consisting of bundled sheets discharged from the image forming apparatus by using staples. In the meantime, in addition to the configuration where the electric stapler 20A is embedded in the post-processing apparatus 10, like the present embodiment, the electric stapler 20A may also be attached to the image forming apparatus (for example, a sheet discharge opening).

The control unit 12 on the apparatus-side is connected to the electric stapler 20A via the communication interface 14 and a communication line 40, and is configured to implement predetermined binding processing by transmitting and receiving signals (commands) for the binding processing to and from the electric stapler 20A. For example, an operation start signal and an operation stop signal of the electric stapler 20A are transmitted to the electric stapler 20A. Also, when there is a plurality of operations modes in which binding processing rates are different, a signal for executing a mode designated from an outside is transmitted to the electric stapler 20A. Also, the control unit 12 on the apparatus-side is connected to a control unit on the image forming apparatus-side, and is configured to control the electric stapler 20A and the like in conjunction with the image forming apparatus. In the meantime, the communication line 40 will be described in detail later.

The power supply unit 16 is supplied with power from a commercial power supply or the image forming apparatus, and feeds the power to the electric stapler 20A and the like embedded in the post-processing apparatus 10.

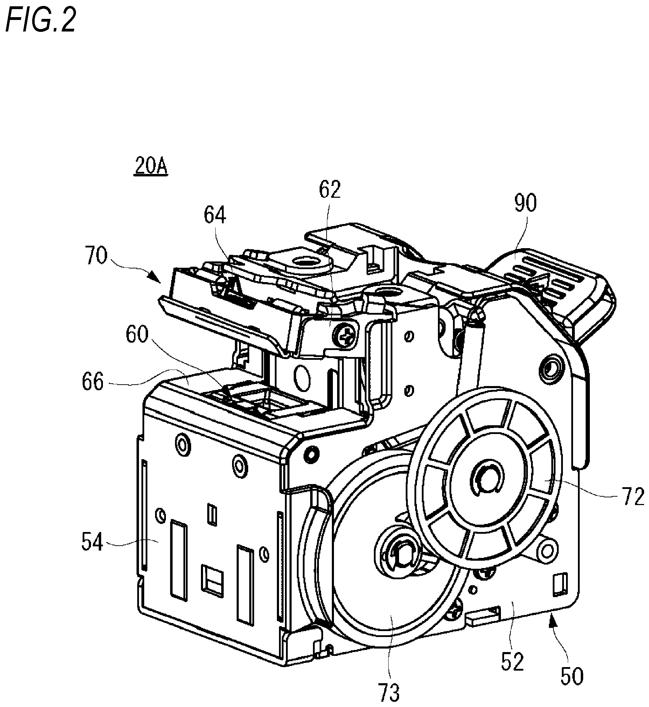

The electric stapler 20A includes a binding unit 70 (refer to FIG. 2) configured to execute the binding processing for the sheet bundle, a motor 28 configured to drive the binding unit 70, a control unit 22 configured to control the motor 28, and a communication interface 24 for performing communication with the control unit 12 on the apparatus-side. Also, the electric stapler 20A includes a drive circuit 26 configured to regulate a voltage that is supplied to the motor 28, a first sensor 34, a second sensor 36 and a third sensor 38 configured to detect various states of the electric stapler 20A, and a converter 32 configured to convert a drive-system voltage (24V) that is supplied from the post-processing apparatus 10 into a control-system voltage (5V).

The motor 28 is configured by a brushless motor including a rotor and a stator, and is configured to rotate at a predetermined speed on the basis of a voltage that is supplied from the drive circuit 26, thereby driving the binding unit 70. The motor 28 has a Hall sensor 30 embedded therein. The Hall sensor 30 is an example of the rotation number detection unit (load detection unit), and is configured to detect a magnet polarity of the rotor configuring the motor 28, thereby outputting position signals (the number of rotations of the motor 28) indicative of positions of the rotor to the control unit 22.

The control unit 22 includes a CPU (Central Processing Unit) 23. The CPU 23 is configured to implement the predetermined binding processing by executing a variety of programs stored in a storage unit (not shown). Also, the control unit 22 is configured to generate a drive signal for driving the drive circuit 26, based on the position signals from the Hall sensor 30 of the motor 28, a set command values and the like, and to output the generated drive signal to the drive circuit 26. Specifically, the control unit 22 is configured to calculate a rotating speed of the motor 28, based on the positions signals from the Hall sensor 30 and the like, and to control the motor 28, based on the calculated rotating speed. Specifically, the control unit 22 is configured to regulate a duty ratio of a PWM (Pulse Width Modulation) in the drive circuit 26 so as to follow a preset target rotating speed of the motor 28 based on the rotating speed of the motor 28.

The drive circuit 26 includes an inverter having a plurality of switching elements, and is configured to control the rotating speed of the motor 28 by the inverter. As the switching element, for example, a MOSFET (electric field transistor), an IGBT (insulated gate bipolar transistor) and the like can be used. The drive circuit 26 is configured to control on and off states of the switching elements, based on the drive signal supplied from the control unit 22, thereby regulating power that is fed to the motor 28. In the meantime, the drive circuit 26 may also be embedded in the motor 28.

The communication interface 24 has a connector corresponding to standards for performing serial communication with the post-processing apparatus 10. The communication interface 24 is connected to a connector provided at one end portion of the communication line 40, and a connector provided at the other end portion of the communication line 40 is connected to the communication interface 14 of the post-processing apparatus 10.

The communication line 40 includes a first wire 41 for transmitting a signal from the electric stapler 20A to the post-processing apparatus 10, and a second wire 42 for transmitting a signal from the post-processing apparatus 10 to the electric stapler 20A. The first wire 41 is configured to transmit state information of the electric stapler 20A, which is a detection result from the first sensor 34 and the like of the electric stapler 20A, to the post-processing apparatus 10, for example. The second wire 42 is configured to transmit the operation start signal and the operation stop signal of the electric stapler 20A to the electric stapler 20A, for example.

The converter 32 is connected to the power supply unit 16 of the post-processing apparatus 10 via a power supply line 44. The power supply line 44 is configured by two positive and negative wires. The converter 32 is configured to convert a drive-system voltage that is supplied from the post-processing apparatus 10 into a control-system voltage, and to supply the converted control-system voltage to the drive circuit 26. The control-system voltage is, for example, 5V

The first sensor 34 is an example of a stapler state detection unit, and is configured to detect whether a gear 73 (refer to FIG. 2) configured to drive the binding unit 70 and the like rotates by one revolution from an initial position (hereinbelow, referred to as a home position) and returns to the home position, and to output a result of the detection to the control unit 22.

The second sensor 36 is an example of a stapler state detection unit, and is configured to detect whether a staple bent by a forming plate of a driver mechanism 60 is in a striking-out position in which it can be struck to the sheet bundle, and to output a result of the detection to the control unit 22.

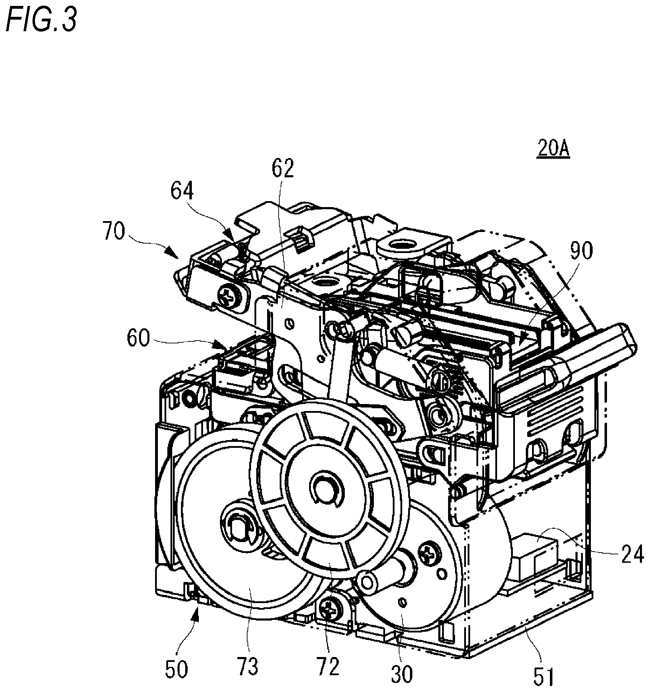

The third sensor 38 is an example of a stapler state detection unit, and is configured to detect whether the number of coupled staples accommodated in a cartridge 90 (refer to FIG. 3) is equal to or smaller than a predetermined value, and to output a result of the detection to the control unit 22. As used herein, the coupled staples indicate that straight staples before being bent are coupled in a sheet shape.

In the meantime, in the present embodiment, the example of the electric stapler 20A in which the three sensors are used has been described. However, the present disclosure is not limited thereto. For example, a sensor for detecting states and the like of the electric stapler 20A may also be used, in addition to the three sensors. Also, other sensors may be used, instead of the three sensors.

### (Example of Outer Shape and Internal Configuration of Electric Stapler 20A)

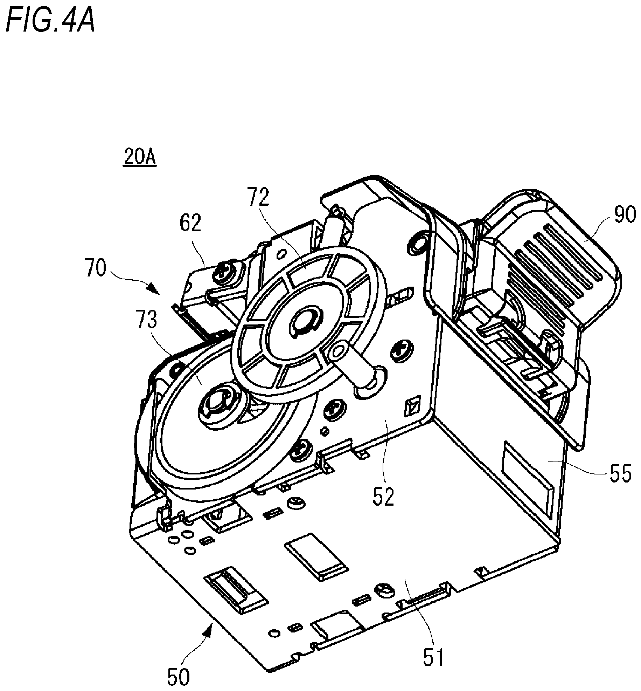

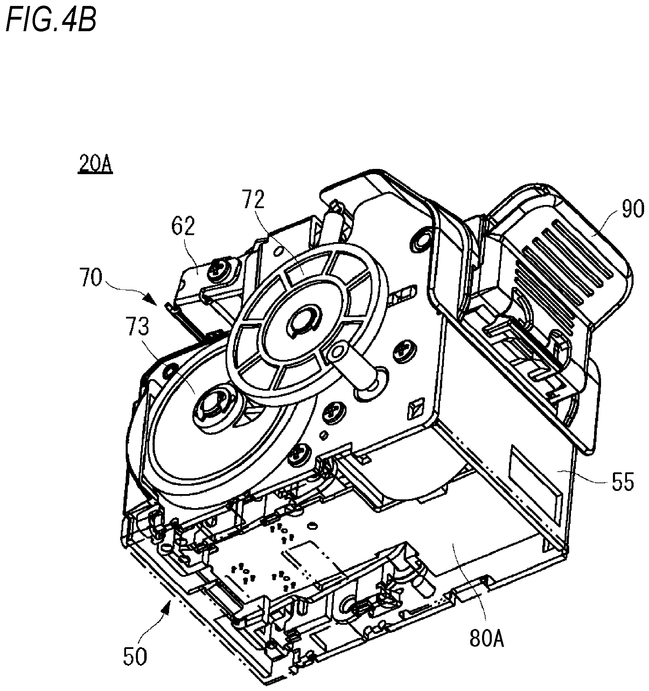

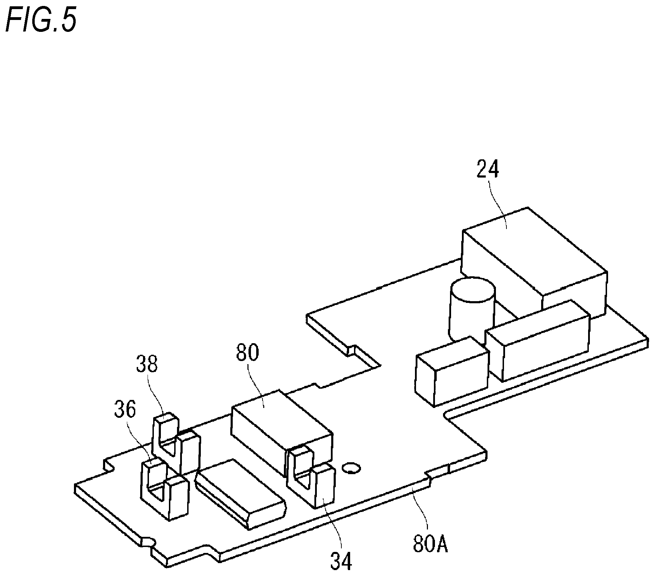

FIG. 2 is a perspective view of the electric stapler 20A in accordance with the embodiment, as seen from the front, FIG. 3 is a perspective view of an inside of the electric stapler 20A in accordance with the embodiment, as seen from the rear, FIG. 4A is a perspective view of the electric stapler 20A in accordance with the embodiment, as seen from the rear, FIG. 4B is a perspective view depicting a state where a bottom wall 51 of the electric stapler 20A shown in FIG. 4A is detached, and FIG. 5 is a perspective view of a substrate 80A that is mounted on the electric stapler 20A in accordance with the embodiment.

In the meantime, in FIGS. 2 to 5, a side of the electric stapler 20A on which the driver mechanism 60 is disposed is referred to as a front side of the electric stapler 20A, and an opposite side thereof is referred to as a rear side of the electric stapler 20A. Also, a side of the electric stapler 20A on which gears 72 and 73 are provided is a referred to as a left side of the electric stapler 20A, and an opposite side thereof is referred to as a right side of the electric stapler 20A. Also, a bottom wall 51-side of the main body part 50 is referred to as a lower side of the electric stapler 20A, and an opposite side thereof is referred to as an upper side of the electric stapler 20A.

The electric stapler 20A includes a main body part 50 having a box shape of which an upper side is opened and in which the control unit 22 and the motor 28 are accommodated, and a binding unit 70 configured to execute binding processing for a sheet bundle by using staples.

The main body part 50 has a rectangular bottom wall 51, as seen from above, a first sidewall 52 erected from a left end of the bottom wall 51, a second sidewall 53 facing the first sidewall 52 and erected from a right end of the bottom wall 51, a front wall 54 erected from a front end of the bottom wall 51, and a rear wall 55 facing the front wall 54 and erected from a rear end of the bottom wall 51.

The binding unit 70 includes a driver mechanism 60, a clincher arm 62, and a clincher part 64. A placement 66 on which a sheet bundle is to be placed is provided in a position above the driver mechanism 60 and facing the clincher part 64.

The driver mechanism 60 is disposed in a front side of the main body part 50 and is configured to move up and down relative to the placement 66 as the motor 28 is driven. The driver mechanism 60 is configured to bend both ends of a staple into a substantial U-shape by a forming plate (not shown), and to strike out the staple formed into the U-shape toward the sheet bundle by a driver (not shown).

The clincher arm 62 is provided to be rotatable toward an upper side of the driver mechanism 60, and is configured so that a front end side thereof can move toward and away from the driver mechanism 60. The clincher part 64 is provided at a front end portion of the clincher arm 62, and is configured to bind the sheet bundle with the staple by bending inwardly leg portions of the staple having penetrated the sheet bundle in cooperation with the driver mechanism 60.

A cartridge 90 is detachably attached to the main body part 50. In the cartridge 90, a refill in which sheet-shaped coupled staples are stacked is accommodated. The coupled staples in the refill of the cartridge 90 are conveyed to a forming position by a delivery mechanism (not shown) of the driver mechanism 60.

The motor 28 is disposed in a rear side of the main body part 50 and below the cartridge 90. The gears 72 and 73 configured to rotate in conjunction with drive of the motor 28 are attached to an outer surface of the first sidewall 52. The gear 72 is connected to a rotary shaft of the motor 28, and the gear 73 is connected to the gear 72. A swing arm (not shown) is directly or indirectly connected between the gear 73 and the binding unit 70 such as the driver mechanism 60, the clincher part 64 and the like, so that the driver mechanism 60, the clincher part 64 and the like are driven in conjunction with rotation of the gear 73. In the present embodiment, while the gear 73 and the like rotate by one revolution, a clamp process of moving the clincher part 64 down to clamp the sheet bundle, a penetration process of causing the leg portions of the staple to penetrate the sheet bundle by upward movement of the driver mechanism 60, and a clinch process of bending the staple by the clincher part 64, and a return process of returning the clincher part 64, the driver mechanism 60 and the like to the home position are executed.

Also, in the present embodiment, as shown in FIG. 4B, the substrate 80A is disposed in a position (above the bottom wall 51) adjacent to the bottom wall 51 in the main body part 50. Specifically, the substrate 80A is disposed in a position in which the substrate does not overlap the motor 28, as seen from above, in a space between the driver mechanism 60 and the cartridge 90 and the bottom wall 51. On one surface of the substrate 80A, a sensor group of the first sensor 34, the second sensor 36 and the third sensor 38, the control unit 22, the communication interface 24, and the drive circuit 26 are mounted. That is, the sensor group, the control unit 22, and the like are mounted on the same substrate 80A.

The first sensor 34 is configured by a transmission type sensor having a light emitting unit and a light receiving unit, and is configured to output, to the control unit 22, a detection signal based on whether light is shielded by an actuator configured to operate in conjunction with a rotating operation of the gear 73.

The second sensor 36 is configured by a transmission type sensor having a light emitting unit and a light receiving unit, and is configured to output, to the control unit 22, a detection signal based on whether light is shielded by an actuator configured to operate in conjunction with a staple moving to a striking-out position.

The third sensor 38 is configured by a transmission type sensor having a light emitting unit and a light receiving unit, and is configured to output, to the control unit 22, a detection signal based on whether light is shielded by an actuator configured to operate in conjunction with the number of staples accommodated in the cartridge 90.

### (Operation Example of Electric Stapler 20A)

Subsequently, an example of the operation of the electric stapler 20A is described with reference to FIGS. 1 to 5.

Before the drive of the motor 28 starts and immediately after the drive of the motor 28 starts, the clincher part 64 is disposed in an uppermost position of a moving range (hereinbelow, referred to as a home position of the clincher part 64), and the driver of the driver mechanism 60 is disposed in a lowest position of the moving range (hereinbelow, referred to as a home position of the driver).

A sheet on which an image is formed by the image forming apparatus is conveyed to the electric stapler 20A in the post-processing apparatus 10. A sheet bundle consisting of a plurality of sheets is placed on the placement 66 of the electric stapler 20A.

The control unit 22 of the electric stapler 20A starts the drive of the motor 28, based on an operation start signal transmitted from the control unit 12 on the apparatus-side via the communication interface 14, the communication line 40 and the communication interface 24. In association with the drive, the gears 72 and 73 rotate. As the gear 73 and the like rotate, the clincher arm 62 rotates, so that the clincher part 64 moves toward the placement 66 and the sheet bundle is clinched by the clincher part 64 and the placement 66 (clinch process).

Also, when the gear 73 rotates by a predetermined angle, the forming plate of the driver mechanism 60 moves upward to bend a staple of the coupled staples located in the tip end position into a substantial U-shape. At the same time, the driver of the driver mechanism 60 moves toward the placement 66 to push out the staple bent into a U-shape toward the sheet bundle, thereby causing the leg portions of the staple to penetrate the sheet bundle in a thickness direction (penetration process). At this time, a crown portion of the staple is brought into contact with the lowest surface of the sheet bundle.

Continuously, when the gear 73 rotates by a predetermined angle, the clincher part 64 is driven and the leg portions of the staple protruding from the top surface of the sheet bundle are bent inwardly by the clincher part 64, so that the sheet bundle is bound with the staple (clinch process).

Also, when the gear 73 rotates to a position close to the home position about by one revolution, the clincher arm 62 rotates, the clincher part 64 moves upward to return to the home position, and the driver of the driver mechanism 60 moves downward to return to the home position (return process). In this way, while the gear 73 rotates by one revolution, a series of binding processing including the clamp process, the penetration process, the clinch process and the return process is executed.

In this case, the control unit 22 of the electric stapler 20A transmits state information, which indicates that the gear 73 has returned to the home position, to the control unit 12 on the apparatus-side via the communication interface 24 and the like. The control unit 12 on the apparatus-side transmits an operation stop signal for stopping the binding processing of the electric stapler 20A based on the state information of the electric stapler 20A to the control unit 22 of the electric stapler 20A via the communication interface 14 and the like. The control unit 22 of the electric stapler 20A stops the drive of the motor 28, based on the operation stop signal transmitted from the post-processing apparatus 10.

As described above, in the present embodiment, the electric stapler 20A-side is provided with the drive circuit 26 configured to drive the motor 28, the control unit 22 configured to control the drive circuit 26, and the communication interface 24 configured to perform communication with the post-processing apparatus 10. For this reason, the electric stapler 20A and the post-processing apparatus 10 can be connected to each other only by the two-system harness of the communication line 40 for transmitting the operation start signal, the operation stop signal and the like of the binding processing from the post-processing apparatus 10 to the electric stapler 20A and transmitting the state information of the electric stapler 20A to the post-processing apparatus 10, and the power supply line 44 for feeding the power from the post-processing apparatus 10 to the electric stapler 20A.

In contrast, according to the electric stapler of the related art, since the electric stapler-side is not provided with the control unit, the drive circuit and the like, it is necessary to provide a three-system harness of a harness for transmitting the state information of the electric stapler from the electric stapler to the post-processing apparatus, a harness for transmitting a drive signal for controlling a motor from the post-processing apparatus to the electric stapler, and a harness for feeding power from the post-processing apparatus to the electric stapler.

However, according to the present embodiment, it is possible to reduce the harnesses from the three systems to the two systems and to reduce the number of wires for interconnecting the electric stapler 20A and the post-processing apparatus 10, as compared to the electric stapler of the related art. Thereby, it is possible to reduce the cost, to simplify arrangement of the wires, to reduce the noise and to improve the durability. Also, even when the number of various sensors increases as the electric stapler 20A is highly functionalized, it is possible to prevent an increase in the number of wires.

Also, in the present embodiment, the control unit 22, the communication interface 24, the drive circuit 26, and the sensor group of the first sensor 34, the second sensor 36 and the third sensor 38 are mounted on the same substrate 80A, and the substrate 80Ais disposed in the position adjacent to the bottom wall 51 of the main body part 50 of the electric stapler 20A. That is, it is possible to dispose the substrate 80A in the empty space in the main body part 50 while avoiding the motor and the mechanism part such as a cam disposed in the main body part 50. Thereby, it is possible to save the space, so that it is possible to make the electric stapler 20A smaller. Also, the brushless motor in which the drive circuit 26 and the Hall sensor 30 are embedded is used as the motor 28, so that it is not necessary to separately provide an encoder for detecting the number of rotations, and the like. Therefore, it is possible to make the electric stapler 20A further smaller. Also, the brushless motor is used, so that it is possible to calculate the rotating speed of the motor 28, and to control the rotating speed of the motor 28, based on the calculated rotating speed.

### <First Modified Embodiment

In the meantime, FIG. 4B of the embodiment depicts the example where the substrate 80A is disposed in the position adjacent to the bottom wall 51 of the main body part 50 of the electric stapler 20A. However, the present disclosure is not limited thereto.

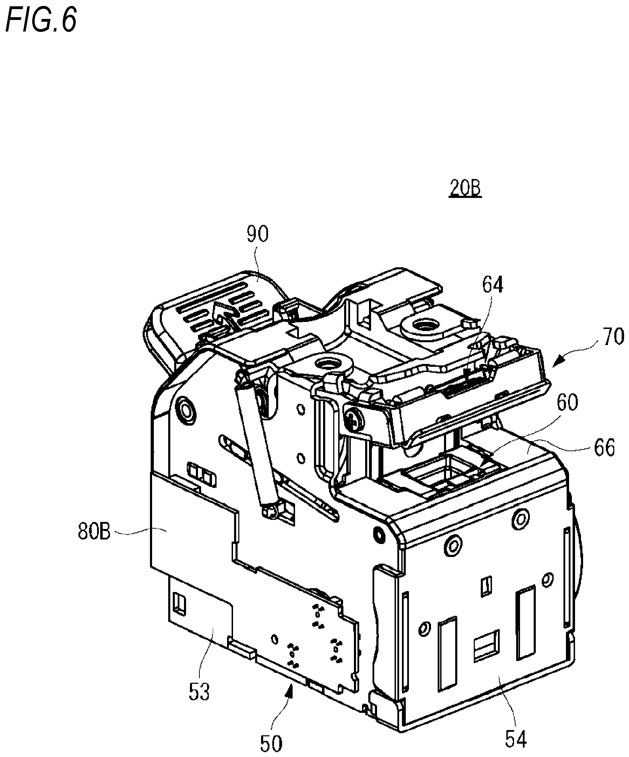

FIG. 6 is a perspective view of an electric stapler 20B in accordance with a first modified embodiment, as seen from the front. In the meantime, since a configuration of the electric stapler 20B is similar to the electric stapler 20A, except that an attaching position of a substrate 80B to the main body part 50 is different, the common constitutional elements are denoted with the same reference signs and the detailed descriptions thereof are omitted.

In the electric stapler 20B, the substrate 80B is disposed in a position adjacent to the second sidewall 53 of the main body part 50. That is, in the first modified embodiment, the substrate 80B is attached on an outer surface of the second sidewall 53, not the first sidewall 52 to which the gears 72 and 73 are attached.

According to the first modified embodiment, since the substrate 80B is attached on the outer surface of the second sidewall 53, it is possible to make the electric stapler 20B smaller without influencing a layout of the driver mechanism 60 and the like in the main body part 50. In the meantime, the substrate 80B may also be attached on an inner surface of the second sidewall 53, not the outer surface of the second sidewall 53.

In the meantime, in the embodiment and the first modified embodiment, although the embodiments of the present disclosure have been described in detail with reference to the drawings, the embodiments are provided just to illustrate the present disclosure, not to limit the present disclosure. Also, the embodiments can be variously modified and changed without departing from the essence and scope of the present disclosure.

For example, in the embodiments, the Hall sensor 30 is embedded in the motor 28, and the position and number of rotations of the rotor that are examples of the load of the motor 28 are detected by the Hall sensor 30. However, the present disclosure is not limited thereto. For example, a current detection unit may be provided instead of the Hall sensor 30, and a current value applied to the motor 28 as the load of the motor 28 may be detected.

Also, in the embodiments, the communication interfaces 14 and 24 are interconnected by the wired communication line 40. However, the present disclosure is not limited thereto. For example, the communication interfaces 14 and 24 may be provided with a wireless communication function, respectively, and may be interconnected in a wireless manner.

## Claims

1. An electric stapler configured to perform communication with a sheet processing apparatus, the electric stapler comprising:
a binding unit configured to execute binding processing for a sheet bundle;
a motor configured to drive the binding unit;
a control unit configured to control the motor;
a communication interface configured to perform communication with the sheet processing apparatus; and
a main body part in which the motor and the control unit are accommodated,
wherein the control unit controls the motor to execute the binding processing by the binding unit when a predetermined signal is received from the sheet processing apparatus via the communication interface.

2. The electric stapler according to Claim 1, further comprising a load detection unit configured to detect a load of the motor,
wherein the control unit is configured to control the motor, based on the load of the motor detected by the load detection unit.

3. The electric stapler according to Claim 2, wherein the control unit is configured to control the motor so as to follow a preset target value, based on the load of the motor detected by the load detection unit.

4. The electric stapler according to Claim 2 or 3, wherein the load detection unit includes a rotation number detection unit configured to detect a number of rotations of the motor or a current detection unit configured to detect a current value applied to the motor.

5. The electric stapler according to any one of Claims 1 to 4, wherein the control unit is disposed below the binding unit and the motor.

6. The electric stapler according to any one of Claims 1 to 5, wherein the main body part has a bottom wall, and
wherein the control unit is disposed in a position adjacent to the bottom wall.

7. The electric stapler according to any one of Claims 1 to 4, wherein the main body part has a sidewall, and
wherein the control unit is disposed in a position adjacent to the sidewall.

8. The electric stapler according to any one of Claims 1 to 7, further comprising a stapler state detection unit configured to detect whether or not a staple for binding the sheet bundle is present,
wherein the control unit is disposed on a same substrate as the stapler state detection unit.
